(19) Europäisches Patentamt
European Patent Office
Office européen des brevets

(11) **EP 4 385 602 A1**

(12) **EUROPEAN PATENT APPLICATION**
published in accordance with Art. 153(4) EPC

(43) Date of publication:
**19.06.2024 Bulletin 2024/25**

(21) Application number: **22855703.9**

(22) Date of filing: **15.03.2022**

(51) International Patent Classification (IPC):
**B01D 21/01** (2006.01)     **B01D 21/30** (2006.01)
**G01N 15/06** (2006.01)

(52) Cooperative Patent Classification (CPC):
**B01D 21/01; B01D 21/30; G01N 15/06;**
Y02W 10/10

(86) International application number:
**PCT/JP2022/011660**

(87) International publication number:
**WO 2023/017637 (16.02.2023 Gazette 2023/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **11.08.2021 JP 2021131205**

(71) Applicant: **Kurita Water Industries Ltd.**
**Tokyo 164-0001 (JP)**

(72) Inventors:
• **INOUE, Ken**
  **Tokyo 164-0001 (JP)**
• **NAGAO, Nobuaki**
  **Tokyo 164-0001 (JP)**
• **SUZUKI, Mizuki**
  **Tokyo 164-0001 (JP)**

(74) Representative: **Hoffmann Eitle**
**Patent- und Rechtsanwälte PartmbB**
**Arabellastraße 30**
**81925 München (DE)**

(54) **FLOCCULATION PROCESSING DEVICE**

(57)    There is provided a coagulation treatment device configured to perform chemical injection control based on a coagulation state monitoring sensor, the coagulation treatment device being capable of accurately controlling the addition amount of a coagulant with the color and amount of particles taken into consideration. A coagulant is added to a coagulation tank 3 by a chemical injection device 4. A detection signal from a coagulation state monitoring sensor 10 provided at a coagulation device 3 is input to a controller 8 and the chemical injection device 4 is controlled. The coagulation state monitoring sensor 10 includes a light emitting unit configured to emit a laser beam toward coagulation treatment solution, and a light receiving unit having a light reception optical axis orthogonal to a light emission optical axis of the light emitting unit. A light reception signal intensity change range is corrected by using light reception signal intensity, and a floc formation state is determined based on a corrected value of the light reception signal intensity change range.

Fig. 1

**Description**

Technical Field

The present invention relates to a coagulation treatment device configured to perform coagulation treatment of various kinds of industrial wastewater and industrial water, sludge, or the like, and particularly relates to a coagulation treatment device including a coagulation state monitoring sensor.

Background Art

In a case where coagulation treatment is performed to remove suspensoid, organic matters, and the like from various kinds of wastewater and water, an inorganic flocculant such as iron chloride or poly aluminum chloride and a polymer coagulant are used in combination in some cases. Use of such two types of chemicals leads to coarsening of coagulation flocs and facilitates solid-liquid separation operation at a later stage, and also enables reduction of the amount of sludge generation through reduction of the addition amount of an inorganic coagulant.

In a case where dehydration treatment of sludge generated through biotreatment of wastewater is performed, coagulation treatment is sometimes performed by using an inorganic coagulant such as iron chloride or poly aluminum chloride and a polymer coagulant in combination before the dehydration treatment. With such combination of an inorganic coagulant and a polymer coagulant, charged neutralization of sludge is efficiently performed and floc strength is enhanced, and accordingly, the moisture content of sludge (dehydrated cake) after dehydration treatment can be largely reduced.

A coagulant needs to be added in an appropriate amount in accordance with the water quality of treatment target water and the properties of treatment target sludge. In coagulation treatment of wastewater and water, removal of suspensoid and organic matters contained in treatment target water is insufficient with an insufficient chemical addition amount (injection amount), and the quality of treated water degrades. However, when the chemical addition amount is excessive, chemicals leak to a later stage and potentially cause load increase and fouling in treatment at the later stage.

In sludge treatment, charged neutralization of sludge is insufficient when the chemical addition amount is insufficient, and furthermore, floc strength decreases, the moisture content of a dehydrated cake increases, and sludge leaks into dehydration separated liquid in some cases. However, floc strength decreases also when the chemical addition amount is excessive, and thus the moisture content of a dehydrated cake increases and sludge leaks into dehydration separated liquid in some cases.

Desk tests such as jar tests and coagulation, filtration, and compression tests (Buchner funnel tests) are basic to determine an optimum chemical addition amount. However, work is needed and it is not realistic to perform a desk test at each water quality variation of treatment target water or each property variation of treatment target sludge because variation cannot be swiftly responded in actual water treatment and sludge treatment.

PTL 1 discloses coagulant addition control by using a coagulation state monitoring sensor configured to measure a coagulation state by emitting a laser beam into water and receiving light scattered by flocs or the like in the water.

Citation List

Patent Literature

PTL 1: JP 2017-26438 A

Summary of Invention

Technical Problem

In chemical injection control based on such a coagulation state monitoring sensor, change of an output signal from the coagulation state monitoring sensor was thought to be mainly due to particle diameters, but research by the inventor of the present invention has found that the change is also affected by the color and amount of particles.

The present invention is intended to provide a coagulation treatment device configured to perform chemical injection control based on a coagulation state monitoring sensor, the coagulation treatment device being capable of accurately controlling the addition amount of a coagulant with the color and amount of particles taken into consideration.

Solution to Problem

A coagulation treatment device of the present invention comprises a coagulant addition device configured to add a coagulant to a pipe or a coagulation tank, a coagulation state monitoring sensor provided in contact with coagulated liquid in the pipe or the coagulation tank, and a controller configured to control the coagulant addition device based on a detected value from the coagulation state monitoring sensor. The coagulation state monitoring sensor includes an irradiation unit configured to emit a laser beam into water and a light receiving unit configured to receive scattered light. The controller is configured to determine a floc formation state in the pipe or the coagulation tank based on temporal change of light reception signal intensity of the scattered light. The controller corrects light reception signal intensity change range information indicating a light reception signal intensity change range by using light reception signal intensity information indicating light reception signal intensity, and determines a floc formation state based on a corrected value of the light reception signal intensity change range information.

In an aspect of the present invention, light reception signal intensity change range information is corrected based on light reception signal intensity information at a control time point based on a correlation relation between a plurality of pieces of light reception signal intensity information in appropriate coagulation states at a plurality of different time points and a plurality of corresponding pieces of light reception signal intensity change range information, and a floc formation state is determined based on a corrected value of the light reception signal intensity change range information.

In an aspect of the present invention, the controller determines a floc formation state based on a ratio of an average value of the light reception signal intensity change range to average light reception signal intensity between start and end of a floc formation state measurement time range.

In an aspect of the present invention, the controller performs coagulant addition control so that a ratio of an average value of the light reception signal intensity change range to average light reception signal intensity becomes equal to or larger than a first predetermined value and equal to or smaller than a second predetermined value.

In an aspect of the present invention, the light reception signal intensity change range is a difference between any local maximum value and a local minimum value that appears right before or after a time point at which the local maximum value appears in a graph expressing temporal change of light reception signal intensity.

In an aspect of the present invention, the light reception signal intensity change range is a difference between any local maximum value and an average value of local minimum values right before and after a time point at which the local maximum value appears in a graph expressing temporal change of light reception signal intensity.

In an aspect of the present invention, the average light reception signal intensity is a value obtained by dividing an integrated value of light reception signal intensity from start to end of the floc formation state measurement time range by a time from the start to the end in a graph expressing temporal change of light reception signal intensity.

Advantageous Effects of Invention

A coagulation treatment device of the present invention, which performs chemical injection control based on a coagulation state monitoring sensor can accurately control the addition amount of a coagulant with the color and amount of particles taken into consideration.

Brief Description of Drawings

[Fig. 1] Fig. 1 is a configuration diagram of a coagulation treatment device according to an embodiment.
[Fig. 2] Fig. 2 is a configuration diagram of a coagulation state monitoring sensor.
[Fig. 3] Fig. 3 is a schematic diagram of a measurement region of the coagulation state monitoring sensor.
[Fig. 4] Figs. 4a and 4b are detection waveform diagrams of the coagulation state monitoring sensor.
[Fig. 5] Fig. 5 is a detection waveform diagram of the coagulation state monitoring sensor.
[Fig. 6] Fig. 6 is an explanatory diagram of the area of a detection waveform diagram of the coagulation state monitoring sensor.
[Fig. 7] Fig. 7 is a graph illustrating measurement results in an experiment example.
[Fig. 8] Fig. 8 is a graph illustrating measurement results in the experiment example.
[Fig. 9] Fig. 9 is a graph illustrating measurement results in the experiment example.
[Fig. 10] Fig. 10 is a graph illustrating measurement results in the experiment example.
[Fig. 11] Fig. 11 is a cumulative frequency diagram of a light reception signal intensity change range.
[Fig. 12] Fig. 12 is a graph illustrating a correlational expression.
[Fig. 13] Fig. 13 is a graph illustrating measurement results in the experiment example.
[Fig. 14] Fig. 14 is a graph illustrating measurement results in the experiment example.
[Fig. 15] Fig. 15 is a graph illustrating measurement results in the experiment example.
[Fig. 16] Fig. 16 is a graph illustrating measurement results in the experiment example.

Description of Embodiments

A coagulation treatment device according to an embodiment will be described below with reference to the accompanying drawings.

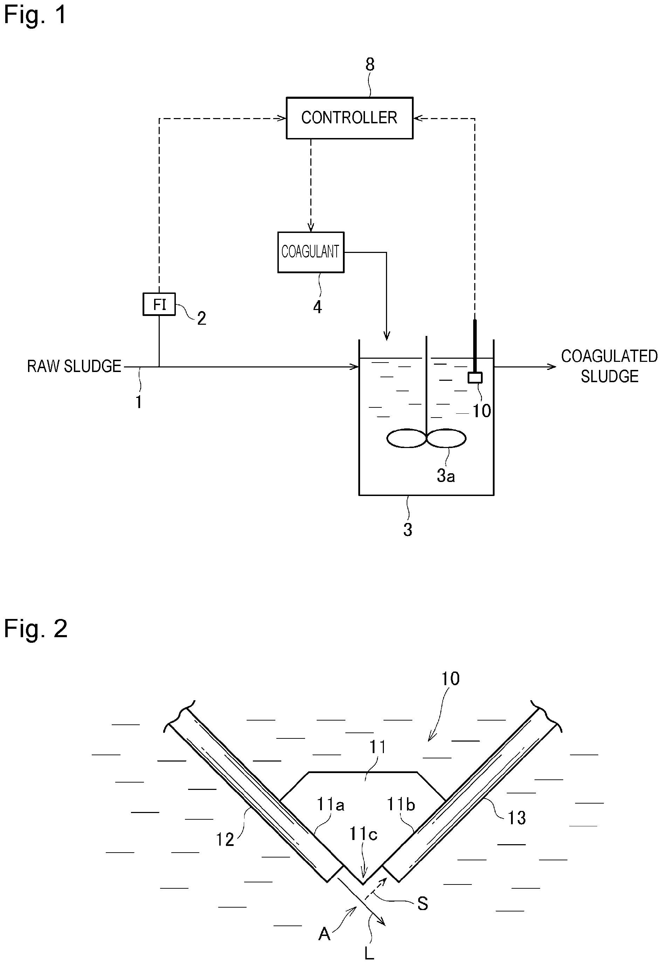

As illustrated in Fig. 1, in this coagulation treatment device, original sludge as treatment target sludge is introduced into a coagulation tank 3 through an inflow pipe 1 provided with a flow meter 2, and a coagulant is added to the sludge by a chemical injection device 4. A stirrer 3a and a coagulation state monitoring sensor 10 are installed in the coagulation tank 3, and a detection signal from the coagulation state monitoring sensor 10 is input to a controller 8. The controller 8 controls the chemical injection device 4 based on the detection signal.

The coagulant may be an inorganic coagulant, an organic coagulant, or combination thereof.

A coagulation state monitoring sensor disclosed in PTL 1 is preferably used as the coagulation state monitoring sensor 10. Fig. 2 illustrates the configuration of a probe of the coagulation state monitoring sensor. The probe includes a block 11 having surfaces 11a and 11b orthogonal to each other and a top part 11c that the surfaces 11a and 11b intersect, a light emitting unit 12 configured to emit a laser beam toward coagulation treatment solution and provided along the surface 11a, and a light receiving unit 13 having a light reception optical axis orthogonal to a light emission optical axis of the light emitting unit 12 and provided along the surface 11b. The coagulation state monitoring sensor 10 includes a light emission circuit, a detection circuit, and a measurement circuit (not illustrated) to perform light emission actuation of the light emitting unit 12 and analysis of a light reception signal from the light receiving unit 13. The measurement circuit includes a timing circuit, an A/D conversion unit, a calculation unit, and the like.

Similarly to PTL 1, a laser beam emitted from the light emitting unit 12 to a measurement region A in the vicinity of the top part 11c is scattered by particles in the measurement region A, the scattered light is received by the light receiving unit 13, and a coagulation state is measured based on temporal change of the intensity of the light reception. Note that the block 11 is made of an opaque material.

The light emission circuit feeds an electric signal having a constant modulation frequency to the light emitting unit in accordance with a signal from the timing circuit, thereby causing the light emitting unit to perform laser light emission. The light emitting unit emits light a laser beam in accordance with the signal from the light emission circuit. The light receiving unit receives scattered light generated when the laser beam is incident on suspended solids in water, and converts the received light into an electric signal. The detection circuit removes a modulation component of the electric signal from the light receiving unit and outputs light reception voltage in accordance with the intensity of the scattered light.

The measurement circuit transmits a signal (specific frequency modulation wave) for light emission to the light emission circuit and also converts a signal from the detection circuit into a digital signal, performs logical calculation of the signal, and outputs information related to coagulation.

A monitoring device of PTL 1, specifically a patented monitoring device disclosed in JP 6281534 B can be excellently used as the coagulation state monitoring sensor, but the present invention is not limited thereto.

Note that a coagulation monitoring device of JP 6281534 B is "a coagulation monitoring device configured to monitor a treatment state of treatment target water subjected to coagulation treatment, the coagulation monitoring device including:

a measurement light irradiation unit configured to emit measurement light to a measurement region of the treatment target water;
a scattered light receiving unit configured to receive light scattered by particles of the treatment target water in the measurement region; and
a measured value calculation unit including an amplitude measuring unit configured to measure the amplitude of a light reception signal obtained by the scattered light receiving unit, the measured value calculation unit being configured to monitor and tally occurrences of the measured amplitude, calculate the occurrence rate or occurrence frequency of a specific amplitude, and calculate an indicator related to coagulation of the treatment target water and indicating the particle size of flocs in the treatment target water,
wherein the amplitude measuring unit detects a first inflection point at which the light reception signal changes from rise to fall and a second inflection point at which the light reception signal changes from fall to rise, and measures the amplitude based on a level difference between the first inflection point and the second inflection point."

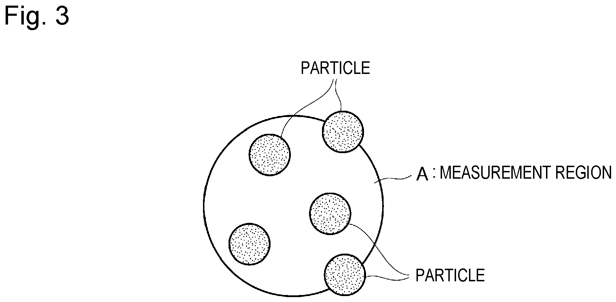

Fig. 3 is a schematic diagram illustrating a section orthogonal to the optical axis of a laser beam L in the measurement region A in Fig. 2. As illustrated in Fig. 3, five particles exist in the measurement region A at a time point. The laser beam emitted to the measurement region A at the time point is scattered by each particle, and scattered light S is incident on the light receiving unit 13. The number of particles existing in the measurement region A varies as a predetermined time $\Delta t$ (preferably, a time selected between 0.1 to 10 mSec: for example, 1 mSec approximately) elapses since the time point (in theory, the number of particles does not change in some cases, but the number of particles typically varies because of Brownian motion of particles and stirring of sludge liquid in the coagulation tank 3).

As the number of particles varies, the scattered light intensity varies accordingly, and the light reception intensity at the light receiving unit 13 varies.

The extent of variation of the light reception intensity when one particle enters or leaves the measurement region A is larger as the particle size of the particle is larger. Thus, the magnitude of the particle size of the particle having entered or left the measurement region A can be detected based on the extent of variation of the light reception intensity. Specifically, the difference between the light reception intensity at any time point $t_k$ and the light reception intensity at a time point $t_{k+1}$ after elapse of $\Delta t$ is proportional to the surface area of the particle having entered or left the measurement region A during the predetermined time $\Delta t$.

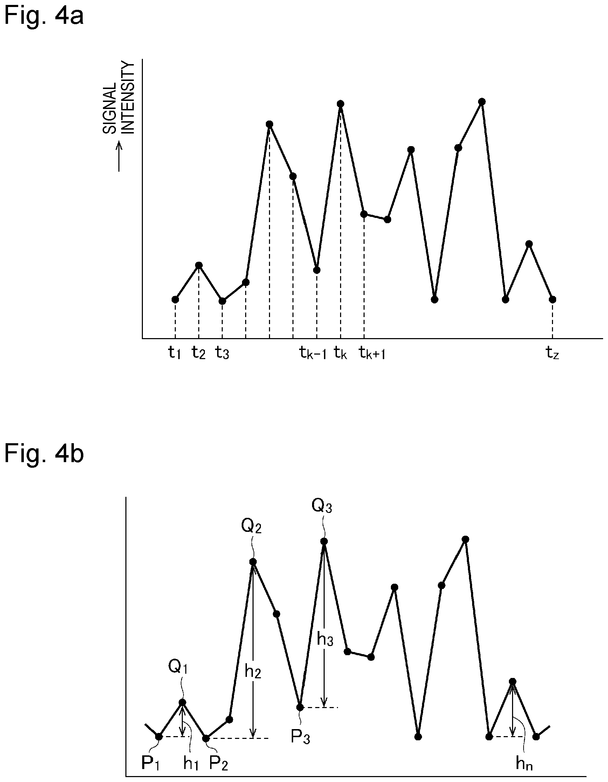

Fig. 4a illustrates an example of temporal change of a coagulation state monitoring sensor output signal obtained through signal processing of a light reception signal from the coagulation state monitoring sensor. The output signal in Fig. 4a has a value proportional to the light reception intensity at the light receiving unit 13, and the unit thereof is, for example, mV.

Fig. 4a is a graph plotting light reception signal intensity measured at time points $t_1$, $t_2$, ..., $t_z$, and the interval $\Delta t$ between the time points (that is, $t_k - t_{k-1}$) is preferably 0.1 to 10 mSec and is, for example, 1 mSec as described above.

Fig. 4b is an explanatory diagram of Fig. 4a with local minimum points $P_1$, $P_2$, ... and local maximum points $Q_1$, $Q_2$, ... and with light reception signal intensity change ranges, in other words, differences $h_1$, $h_2$, ... between a local minimum point and a local maximum point. Note that the number of local maximum points is also referred to as the number of peaks.

As described above, the difference $h_k$ between the light reception signal intensity at any time point $t_{k-1}$ and the light reception signal intensity at the time point $t_k$ is proportional to the surface area of any particle entering or leaving the measurement region A between the time points $t_{k-1}$ to $t_k$.

Particle size distribution of particles existing near the measurement region A between the time points $t_1$ to $t_z$ is detected based on all light reception signal intensity change ranges $h_1$, $h_2$, ..., $h_n$ during $\Delta t \cdot z$ seconds between the time points $t_1$ to $t_z$ (for example, z is 200 and $\Delta t \times z$ is 0.2 seconds in a case of $\Delta t$ = 1 mSec; however, this is an example and z only needs to be 0.01 to 900 seconds approximately).

This detection principle is described below with reference to Fig. 4b. In Fig. 4b, the light reception signal intensity change range $h_1$ indicates detection of a small-diameter particle, the light reception signal intensity change range $h_2$ indicates detection of a large-diameter particle, and the light reception signal intensity change range $h_3$ indicates detection of a particle with an intermediate particle size. The light reception signal intensity change range $h_n$ indicates detection of a particle slightly larger than the particle of $h_1$.

According to this principle, the light reception signal intensity change range of the coagulation state monitoring sensor in a measurement time range $t_1$ to $t_z$ is classified into classes in ascending order and the number of peaks belonging to each class is counted, and as a result, a relative frequency, in other words, the frequency (number of peaks) of each class relative to the total number of peaks is obtained and a cumulative relative frequency of the number of peaks is obtained. Note that the number of classes is two or more and preferably three or more, for example, 10 to 100, in particular.

Note that the use time of a light-emitting element can be extended by repeating light emission and non-light emission at a predetermined time interval. For example, in a case of a light emission time of 0.2 seconds per emission and a light emission interval of two seconds, the use time (lifetime) of the light-emitting element can be extended 10 times longer than in a case where light emission is continuously performed.

Typically, when the chemical injection amount of the coagulant is insufficient, a coagulation defect occurs and the ratio of the number of small-diameter particles relative to the total number of particles increases. When the chemical injection amount of an organic coagulant is excessive, the ratio of the number of large-diameter particles is excessively large.

With such coagulation characteristics taken into consideration, the chemical injection amount of the coagulant is controlled based on a detection signal from the coagulation state monitoring sensor 10, which is installed in the coagulation tank 3, so that coagulated particles have sizes in an appropriate size range.

Typically, in coagulant addition control, the addition amount of the coagulant is controlled so that coagulated particles have sizes in an appropriate size range, in other words, are not too small nor too large.

<Floc formation state determination based on occurrence frequency of the number of peaks with predetermined light reception signal intensity change range or larger and average light reception signal intensity>

In an aspect of the present invention, it is determined that the floc formation state is desirable in a case where the occurrence frequency (in other words, relative frequency) of the number of peaks with a predetermined light reception signal intensity change range or larger is equal to or larger than a threshold value (for example, 80% of the cumulative relative frequency) set in advance. Then, the addition amount of the coagulant is controlled so that the occurrence frequency of the number of peaks with the predetermined light reception signal intensity change range or larger becomes equal to or larger than the threshold value. A specific example will be described below.

<Process 1>

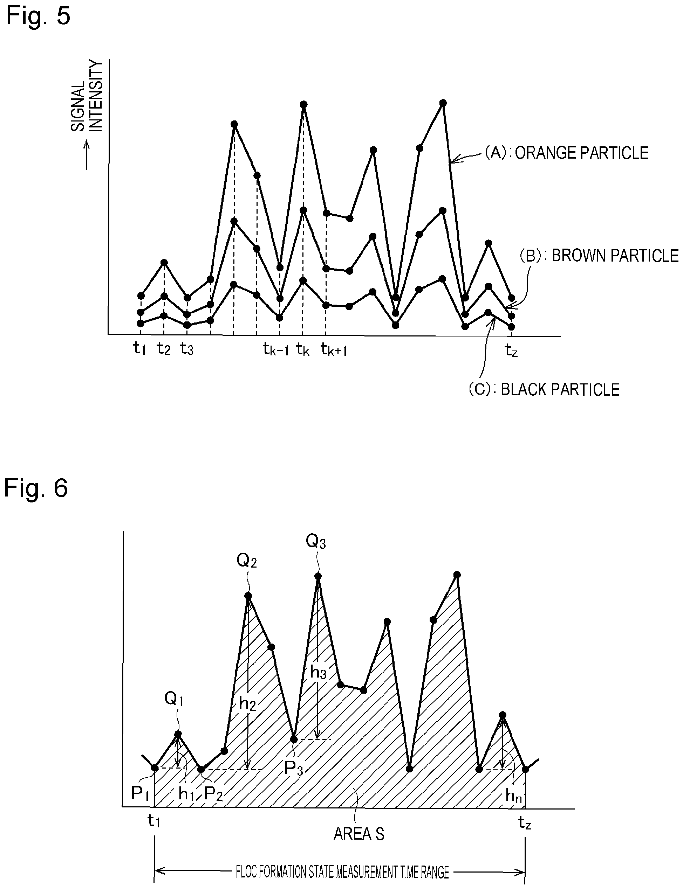

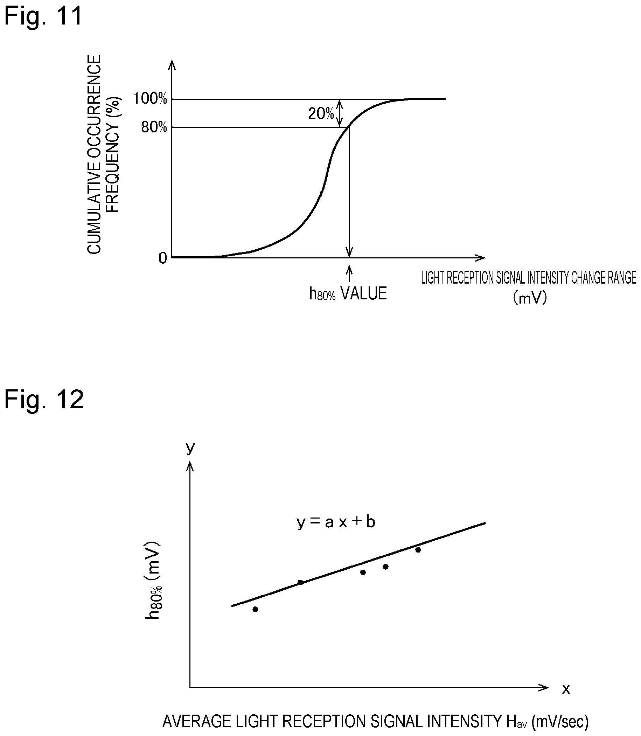

On a day when it is determined by visual determination or the like that the coagulation situation is desirable, a light reception signal intensity change range $h_{80\%}$ (refer to Fig. 11) in a case of the 80 percentile of the cumulative relative frequency of the number of peaks is calculated. In addition, an average light reception signal intensity is calculated. The average light reception signal intensity is obtained by dividing area S (time integral value of the light reception signal intensity) of a hatched region in Fig. 6 by a measurement time ($t_z$ - $t_1$).

Process 1 is performed on each of a plurality of days when the coagulation situation is desirable, and the light reception signal intensity change range $h_{80\%}$ value and the average light reception signal intensity on each day are calculated.

<Process 2>

The light reception signal intensity change range $h_{80\%}$ value and the average light reception signal intensity on each day in Process 1 are plotted on a graph to obtain a correlation diagram of the light reception signal intensity change range $h_{80\%}$ value and the average light reception signal intensity as illustrated in Fig. 12. Then, a relational expression ($y = ax + b$) of the average light reception signal intensity and the 80 percentile ($h_{80\%}$ value) of the cumulative occurrence frequency is determined.

<Process 3>

The measured value of the average light reception signal intensity at the timing of coagulant injection amount control is substituted into x in the relational expression $y = ax + b$ determined as described above to calculate y, in other words, the $h_{80\%}$ value, and the calculated $h_{80\%}$ value is set as a "target light reception signal intensity change range". Then, the addition amount of the coagulant is controlled so that the 80 percentile of the cumulative occurrence frequency of a measured light reception signal intensity change range becomes equal to or larger than the target light reception signal intensity change range.

In the above description, the threshold value set in advance is 20% and the cumulative occurrence frequency is 80%, but these values may be changed. For example, the cumulative occurrence frequency may be 70% or 50% for the threshold value of 20%, and these values may be set as appropriate in a range in which correlation is obtained. However, the threshold value X% and the cumulative occurrence frequency Y% are preferably values with which X + Y is close to 100.

The relational expression is a linear expression in Fig. 12, but may be a quadratic expression or any other expression as long as correlation is obtained. Alternatively, a graph may be produced and the relational expression may be calculated from the graph.

In the above description, light reception signal intensity change range information (light reception signal intensity change range or value corresponding thereto) is the light reception signal intensity change range when the cumulative occurrence frequency is a predetermined value, but is not limited thereto and may be, for example, the average value, median, first interquartile, or third interquartile of the light reception signal intensity change range. In a case where "light reception signal intensity change range information" is the average value or median of the light reception signal intensity change range, a target average light reception signal intensity width may be set based on a correlational expression of the information and the average light reception signal intensity.

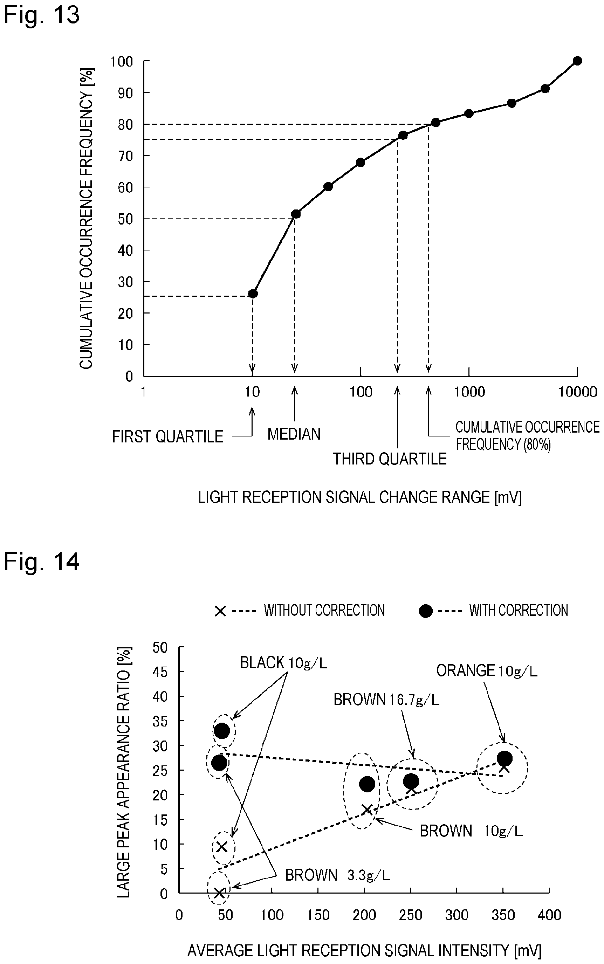

Note that an example of the relation among the median, first interquartile, and third interquartile of the light reception signal intensity change range and the cumulative occurrence frequency is illustrated in Fig. 13.

In the above description, light reception signal intensity information (light reception signal intensity or value corresponding thereto) is the average light reception signal intensity, but is not limited to the average light reception signal intensity and may be the first interquartile, the median, the third interquartile, the maximum value, or any other percentile value.

In a case where a peak wave height value (light reception signal intensity change range) and the light reception signal intensity are correlated with each other, a value corrected by a relational expression of the peak wave height value and the light reception signal intensity is constant irrespective of the color and concentration of a measurement target specimen.

<Another aspect>

In another aspect of the present invention, the coagulant is added so that [average light reception signal intensity change range]/[average light reception signal intensity], which is calculated based on the light reception signal intensity of the coagulation state monitoring sensor, becomes larger than a predetermined value (first predetermined value) to avoid coagulated particles from becoming too small, and the coagulant is added so that [the light reception signal intensity change range]/[average light reception signal intensity] becomes equal to or smaller than a second predetermined value (larger than the first predetermined value) to avoid coagulated particles from becoming too large.

To obtain a graph of [average light reception signal intensity change range] vs [average light reception signal intensity], the first predetermined value, and the second predetermined value, the coagulation treatment device is installed on a field and coagulation treatment of actual wastewater in the field is performed by manually operating the coagulation treatment device for a predetermined duration (for example, one week to one month approximately). In this case, an operation worker checks the coagulation situation and controls the coagulant addition amount based on experience, and simultaneously, temporal change of the signal intensity of the coagulation state monitoring sensor is recorded. Then, [average light reception signal intensity change range]/[average light reception signal intensity] when the coagulation state (floc diameter) reaches the lower limit of an appropriate range during the manual operation duration is calculated as the first predetermined value. In addition, [average light reception signal intensity change range]/[average light reception signal intensity] when the coagulation state (floc diameter) reaches the upper limit of the appropriate range during the manual operation duration is calculated as the second predetermined value. Thereafter, chemical injection control may be performed based on signal intensity detection data from the coagulation state monitoring sensor so that [average light reception signal intensity change range]/[average light reception signal intensity] becomes equal to or larger than the first predetermined value and equal to or smaller than the second predetermined value.

Note that chemical injection control may be performed based on the reciprocal of [average light reception signal intensity change range]/[average light reception signal intensity].

As a result of various researches by the inventor of the present invention, it was found that not only the diameter of particles but also the color and concentration of particles affect the signal intensity of the coagulation state monitoring sensor.

Influence of the color of particles will be described below with reference to Fig. 5. As an example, (A) in Fig. 5 is temporal change of signal intensity in a case where particles consist of orange particles only. Temporal change of signal intensity of particles having the completely same particle size distribution and particle concentration as the orange particles and colored in brown or black is (B) or (C) in Fig. 5. (B) corresponds to a case where particles consist of brown particles only, and (C) corresponds to a case where particles consist of black particles only. Such difference in signal intensity depending on the color of particles occurs because the light reflectance of brown particles is lower than that of orange particles and the light reflectance of black particles is lower than that of brown particles.

With various experiments by the inventor of the present invention, it was found that the ratio [average light reception signal intensity change range]/[average light reception signal intensity]= $h_{ab}/(S/(t_z - t_1))$ of the average value (average light reception signal intensity change range $h_{ab}$) of the light reception signal intensity change range over a floc formation state measurement time range between start $t_1$ and end $t_z$ illustrated in Fig. 6:

$$h_{ab} = (h_1 + h_2 + h_3 +, ..., + h_n)/n$$

and average light reception signal intensity $S/(t_z - t_1)$ obtained by dividing an integrated value S (the area of a hatched part in Fig. 6) of the light reception signal intensity by the length $(t_z - t_1)$ of the floc formation state measurement time range is not affected by the color of particles as in examples to be described later.

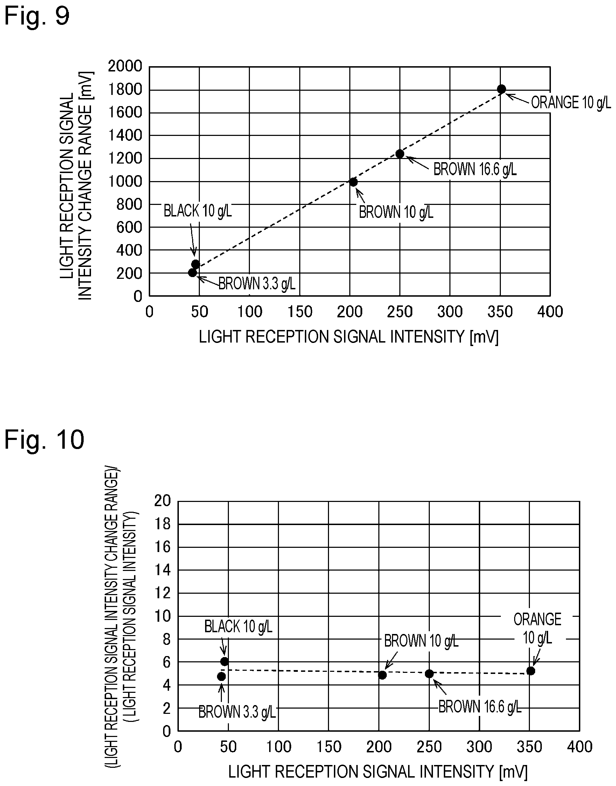

In addition to the above-described relation of the light reception signal intensity with the color of particles, it was found that a graph in a relational diagram of [average light reception signal intensity change range] vs [average light reception signal intensity], such as Fig. 9 is positioned high when the particle concentration is high, positioned intermediate when the particle concentration is intermediate, and positioned low when the particle concentration is low in a case where the color and particle size distribution of particles are the same. In this case as well, it was found that [average light reception signal intensity change range]/[average light reception signal intensity] is a value not affected by the particle concentration.

Accordingly, [average light reception signal intensity change range]/[average light reception signal intensity] is not affected by the color and concentration of particles in cases between which the color and concentration of particles are different.

Thus, even in cases between which the color and concentration of particles are different, coagulant addition control can be performed appropriately (that is, based on a particle size measured value corrected with the color and concentration of particles taken into consideration) based on the light reception signal intensity of the coagulation state monitoring sensor by controlling coagulant addition based on [average light reception signal intensity change range]/[average light reception signal intensity].

In Fig. 1, the controller 8 and the coagulation state monitoring sensor 10 are separately installed, but a control program of the controller 8 may be incorporated in a signal processing unit of the coagulation state monitoring sensor 10 and a control signal may be provided from the coagulation state monitoring sensor 10 to the chemical injection device 4.

The coagulation state monitoring sensor 10 may be installed on a coagulated liquid outflow pipe from the coagulation tank 3. Alternatively, a measurement tank into which liquid in the coagulation tank 3 is introduced may be provided and the coagulation state monitoring sensor 10 may be installed on the measurement tank.

Examples

[Experiment Example 1]

<Experiment purpose>

In order to examine influence of the color of particles on a detected value of the coagulation state monitoring sensor, particle dispersion containing particles having a uniform particle size (1.8 mm) and the same concentration (10 g/L) but having different colors was prepared and signal intensity was measured by using a coagulation state monitoring sensor (S.sensing CS-P manufactured by Kurita Water Industries Ltd.).

[Preparation of particle dispersion]

Algin acid aqueous solution colored in orange, brown, and black was prepared by adding aqueous paint to 0.25 wt% algin acid aqueous solution at room temperature. The algin acid aqueous solution was dropped in 4.0 wt% calcium chlorite aqueous solution by using a buret, and the dropped algin acid aqueous solution was coagulated into minute spherical particles.

The degree of opening of the buret is adjusted so that the diameter of produced particles is 1.8 mm. Accordingly, three types of dispersions having a particle diameter of 1.8 mm, particle colors of orange, brown, and black, and the particle concentration of 10 g/L were prepared.

[Signal intensity measurement using coagulation state monitoring sensor and results]

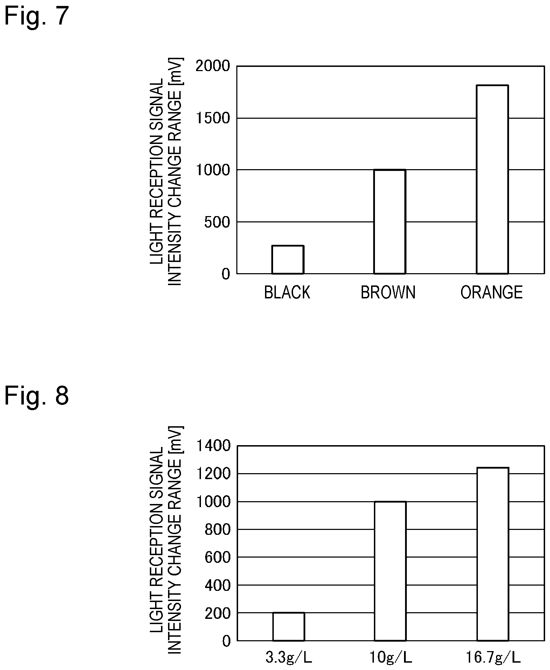

A probe of the coagulation state monitoring sensor was inserted into the dispersion, signal intensity was measured while the dispersion is stirred with a starrer, a similar graph of temporal change of signal intensity to that illustrated in Figs. 4a and 4b was obtained, $h_1$, $h_2$, $h_3$, ..., $h_n$ were measured from the graph, and an average peak height (average light reception signal intensity change range) $h_{ab} = (h_1 + h_2 + h_3 +, ..., +h_n)/n$ was calculated. A result is illustrated in Fig. 7. Note that the interval $\Delta t$ (that is, $t_k - t_{k-1}$) between time points was 1 mSec.

In addition, the integrated value S of the light reception signal intensity over the measurement time range ($t_z - t_1$) was calculated and divided by ($t_z - t_1$) to obtain the average light reception signal intensity $S/(t_z - t_1)$ as follows:

Case of black particles: 45.9 mV
Case of brown particles: 203.4 mV
Case of orange particles: 351.6 mV

The relation between the average light reception signal intensity change range $h_{ab}$ of particles of each color and the average light reception signal intensity of the color is plotted on a graph and illustrated in Fig. 9.

[Experiment Example 2]

In order to examine influence of the concentration of particles, dispersion containing particles having the same particle diameter as brown particles in Experiment Example 1 and the concentration of 3.3 g/L or 16.7 g/L was prepared and the average light reception signal intensity change range and the average light reception signal intensity were measured. Fig. 11 illustrates a measurement result of the average light reception signal intensity change range. Note that Fig. 11 also illustrates the result of brown particles (concentration of 10 g/L) in Experiment Example 1. The relation between the average light reception signal intensity change range and the average light reception signal intensity is illustrated in Fig. 9.

[Discussion]

The relation between the average light reception signal intensity and [average light reception signal intensity change range]/[average light reception signal intensity] obtained by dividing the average light reception signal intensity change range determined in each of Experiment Examples 1 and 2 by the average light reception signal intensity is plotted in Fig. 10.

As illustrated in Fig. 10, it is found that [average light reception signal intensity change range]/[average light reception signal intensity] is five approximately in any case. From this, it is understood that [average light reception signal intensity change range]/[average light reception signal intensity] is a value not affected by the color and concentration of particles.

Thus, it is found that appropriate coagulant addition control is possible without being affected by the color and concentration of particles by adding the coagulant based on [average light reception signal intensity change range]/[average light reception signal intensity].

[Experiment Example 3]

As described above, Fig. 9 is a graph of the average light reception signal intensity and the average light reception signal change range for the artificial particle dispersions prepared in Experiment Example 1, among which particle size is the same but color and concentration are different. A light reception signal change range that serves as a reference of each specimen is calculated based on a correlational expression ($y = 5.0586x + 3.5921$, $R^2 = 0.9973$) determined from Fig. 9, the appearance ratio of a peak equal to or higher than the average light reception signal change range is measured for data "with correction" in Fig. 14, and the light reception signal change range is constant at 1000 mV for data "without correction". As illustrated in Fig. 14, it can be understood that the data with correction has less variance and is usable a reference.

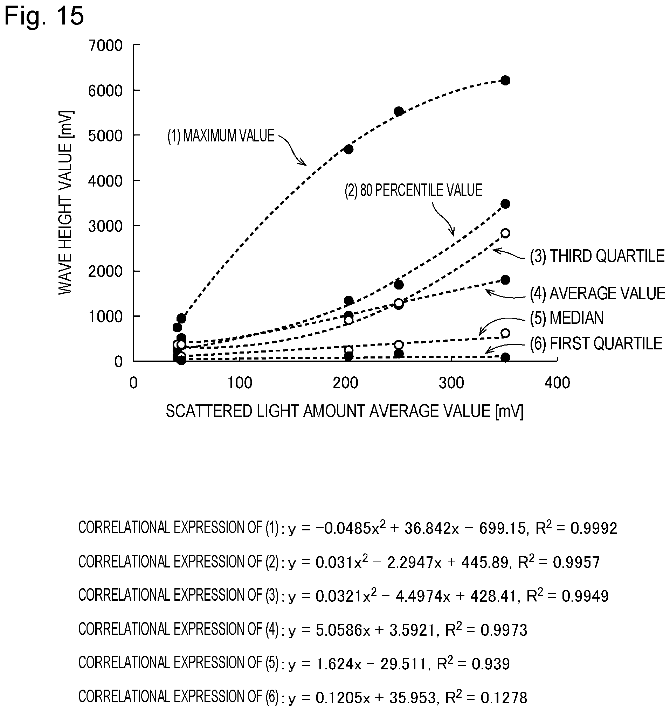

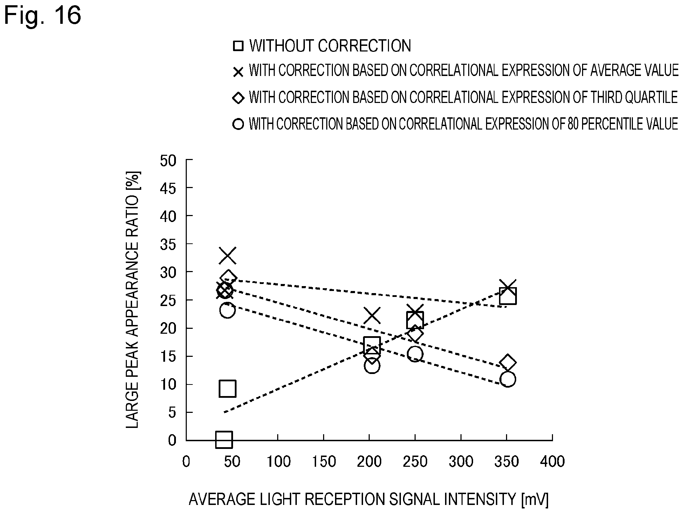

The relation between the average light reception signal intensity and the light reception signal intensity change range at a percentile value is illustrated in Fig. 15. In addition, the relation with peak appearance frequencies calculated for the specimens at the light reception signal intensity change range from correlational expressions written in Fig. 15 is illustrated in Fig. 16.

Note that it is thought that a peak appearance ratio obtained through correction based on the correlational expression of the maximum value is inevitably 100% and cannot be used for floc size inference.

[Experiment Example 4 (field test)]

The method of Experiment Example 3 was applied to an actual equipment. Note that data for producing the correlation between the average light reception signal intensity and the light reception signal intensity change range was produced based on a condition (about three days) under which it is determined by an operator that the moisture content of an obtained dehydrated cake is optimum based on gravitational filterability. Operation was performed by automatic chemical injection based on an expression for the correlation. The result thereof is shown in Table 1. Note that "large peak appearance ratio (before correction)" is the appearance ratio of a peak with a light reception signal width of 5000 mv or larger. In addition, "large peak appearance ratio (after correction)" is the appearance ratio of a peak with a reference light reception signal width or larger. As indicated in Table 1, stable treatment was possible at a low moisture content of 82% approximately for an obtained dehydrated cake by correcting the light reception signal intensity change range information by the method described in the present invention.

[Table 1]

| Date | Light reception signal intensity average value | Large peak appearance ratio | | Cake moisture content |
|---|---|---|---|---|
| | | Before correction | After correction | |
| | | ≥5000mV | ≥1.17×Light reception signal intensity +1460 | |
| | mV | % | % | % |
| First day | 2864 | 14.2 | 15.4 | 82.1 |
| Second day | 2750 | 13.3 | 15.4 | 81.6 |

(continued)

| Date | Light reception signal intensity average value | Large peak appearance ratio | | Cake moisture content |
|---|---|---|---|---|
| | | Before correction | After correction | |
| | | ≥5000mV | ≥1.17×Light reception signal intensity +1460 | |
| | mV | % | % | % |
| Third day | 2610 | 12.2 | 15.5 | 81.7 |

The present invention is described above in detail with reference to specific aspects, but it should be clear to the skilled person in the art that various modifications are possible without departing from the intention and scope of the present invention.

The present application is based upon Japanese Patent Application No. 2021-131205, filed on August 11, 2021, the entire contents of which are incorporated herein by reference.

Reference Signs List

3     coagulation tank

4     chemical injection device
8     controller
10    coagulation state monitoring sensor

**Claims**

1. A coagulation treatment device comprising:

   a coagulant addition device configured to add a coagulant to a pipe or a coagulation tank;
   a coagulation state monitoring sensor provided in contact with coagulated liquid in the pipe or the coagulation tank; and
   a controller configured to control the coagulant addition device based on a detected value from the coagulation state monitoring sensor,
   the coagulation state monitoring sensor including an irradiation unit configured to emit a laser beam into water, and a light receiving unit configured to receive scattered light, and
   the controller being configured to determine a floc formation state in the pipe or the coagulation tank based on temporal change of light reception signal intensity of the scattered light,
   wherein the controller corrects light reception signal intensity change range information indicating a light reception signal intensity change range by using light reception signal intensity information indicating light reception signal intensity, and determines a floc formation state based on a corrected value of the light reception signal intensity change range information.

2. The coagulation treatment device according to claim 1, wherein light reception signal intensity change range information is corrected based on light reception signal intensity information at a control time point based on a correlation relation between a plurality of pieces of light reception signal intensity information in appropriate coagulation states at a plurality of different time points and a plurality of corresponding pieces of light reception signal intensity change range information, and a floc formation state is determined based on a corrected value of the light reception signal intensity change range information.

3. The coagulation treatment device according to claim 1, wherein the controller determines a floc formation state based on a ratio of an average value of the light reception signal intensity change range to average light reception signal intensity between start and end of a floc formation state measurement time range.

4. The coagulation treatment device according to any one of claims 1 to 3, wherein the controller performs coagulant addition control so that a ratio of an average value of the light reception signal intensity change range to average light reception signal intensity becomes equal to or larger than a first predetermined value and equal to or smaller than a second predetermined value.

5. The coagulation treatment device according to any one of claims 1 to 4, wherein the light reception signal intensity change range is a difference between any local maximum value and a local minimum value that appears right before or after a time point at which the local maximum value appears in a graph expressing temporal change of light reception signal intensity.

6. The coagulation treatment device according to any one of claims 1 to 4, wherein the light reception signal intensity change range is a difference between any local maximum value and an average value of local minimum values right before and after a time point at which the local maximum value appears in a graph expressing temporal change of light reception signal intensity.

7. The coagulation treatment device according to any one of claims 1 to 6, wherein the average light reception signal intensity is a value obtained by dividing an integrated value of light reception signal intensity from start to end of the floc formation state measurement time range by a time from the start to the end in a graph expressing temporal change of light reception signal intensity.

Fig. 1

Fig. 2

Fig. 3

PARTICLE

A : MEASUREMENT REGION

PARTICLE

Fig. 4a

Fig. 4b

Fig. 5

Fig. 6

Fig. 7

Fig. 8

Fig. 9

Fig. 10

Fig. 11

Fig. 12

Fig. 13

CUMULATIVE OCCURRENCE FREQUENCY [%]

LIGHT RECEPTION SIGNAL CHANGE RANGE [mV]

FIRST QUARTILE — MEDIAN — THIRD QUARTILE — CUMULATIVE OCCURRENCE FREQUENCY (80%)

Fig. 14

✕ ---- WITHOUT CORRECTION    ● ---- WITH CORRECTION

LARGE PEAK APPEARANCE RATIO [%]

BLACK 10g/L    ORANGE 10g/L    BROWN 16.7g/L    BROWN 10g/L    BROWN 3.3g/L

AVERAGE LIGHT RECEPTION SIGNAL INTENSITY [mV]

Fig. 15

CORRELATIONAL EXPRESSION OF (1) : $y = -0.0485x^2 + 36.842x - 699.15$, $R^2 = 0.9992$

CORRELATIONAL EXPRESSION OF (2) : $y = 0.031x^2 - 2.2947x + 445.89$, $R^2 = 0.9957$

CORRELATIONAL EXPRESSION OF (3) : $y = 0.0321x^2 - 4.4974x + 428.41$, $R^2 = 0.9949$

CORRELATIONAL EXPRESSION OF (4) : $y = 5.0586x + 3.5921$, $R^2 = 0.9973$

CORRELATIONAL EXPRESSION OF (5) : $y = 1.624x - 29.511$, $R^2 = 0.939$

CORRELATIONAL EXPRESSION OF (6) : $y = 0.1205x + 35.953$, $R^2 = 0.1278$

Fig. 16

☐ WITHOUT CORRECTION
✕ WITH CORRECTION BASED ON CORRELATIONAL EXPRESSION OF AVERAGE VALUE
◇ WITH CORRECTION BASED ON CORRELATIONAL EXPRESSION OF THIRD QUARTILE
◯ WITH CORRECTION BASED ON CORRELATIONAL EXPRESSION OF 80 PERCENTILE VALUE

AVERAGE LIGHT RECEPTION SIGNAL INTENSITY [mV]

## INTERNATIONAL SEARCH REPORT

International application No.

**PCT/JP2022/011660**

**A. CLASSIFICATION OF SUBJECT MATTER**

***B01D 21/01***(2006.01)i; ***B01D 21/30***(2006.01)i; ***G01N 15/06***(2006.01)i
FI:  B01D21/30 A; B01D21/01 G; B01D21/01 D; G01N15/06 C; G01N15/06 E

According to International Patent Classification (IPC) or to both national classification and IPC

**B. FIELDS SEARCHED**

Minimum documentation searched (classification system followed by classification symbols)

B01D21/01; B01D21/30; G01N15/06

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2017-026438 A (KURITA WATER IND LTD) 02 February 2017 (2017-02-02)<br>claims, paragraphs [0031], [0043]-[0044], [0112]-[0114], [0145], drawings | 1, 5-6 |
| A | JP 2017-121601 A (SWING CORP) 13 July 2017 (2017-07-13)<br>entire text, all drawings | 1-7 |
| A | KR 10-2019-0055840 A (KEMIRA OYJ) 23 May 2019 (2019-05-23)<br>entire text, all drawings | 1-7 |
| A | JP 2021-099222 A (KUBOTA KK) 01 July 2021 (2021-07-01)<br>entire text, all drawings | 1-7 |
| A | JP 2005-241338 A (KURITA WATER IND LTD) 08 September 2005 (2005-09-08)<br>entire text, all drawings | 1-7 |
| A | JP 2002-195947 A (KURITA WATER IND LTD) 10 July 2002 (2002-07-10)<br>entire text, all drawings | 1-7 |

☐ Further documents are listed in the continuation of Box C.     ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **24 May 2022** | **31 May 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

EP 4 385 602 A1

**INTERNATIONAL SEARCH REPORT**
**Information on patent family members**

International application No.

**PCT/JP2022/011660**

| Patent document cited in search report | | | Publication date (day/month/year) | Patent family member(s) | | | Publication date (day/month/year) |
|---|---|---|---|---|---|---|---|
| JP | 2017-026438 | A | 02 February 2017 | US | 2018/0201527 | A1 | |
| | | | | claims, paragraphs [0043], [0055]-[0056], [0125]-[0127], [0155], fig. 1-15 | | | |
| | | | | EP | 3327425 | A1 | |
| | | | | CN | 107850536 | A | |
| | | | | KR | 10-2018-0031672 | A | |
| JP | 2017-121601 | A | 13 July 2017 | (Family: none) | | | |
| KR | 10-2019-0055840 | A | 23 May 2019 | WO | 2018/065674 | A1 | |
| | | | | EP | 3523255 | A1 | |
| | | | | CN | 109923076 | A | |
| JP | 2021-099222 | A | 01 July 2021 | (Family: none) | | | |
| JP | 2005-241338 | A | 08 September 2005 | (Family: none) | | | |
| JP | 2002-195947 | A | 10 July 2002 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017026438 A
- JP 6281534 B
- JP 2021131205 A